# EUROPEAN PATENT SPECIFICATION

(11) **EP 0 357 049 B1**
(45) Date of publication and mention of the grant of the patent: **05.04.1995**
(21) Application number: 89116030.1
(22) Date of filing: 30.08.1989
(51) Int. Cl.: G11B 20/18, G11B 20/12, G11B 7/013, G06F 3/06

(54) **Information recording medium and recording/reproducing apparatus using the same**
Informationsaufzeichnungsmedium und dasselbe verwendendes Aufzeichnungs/-Wiedergabegerät
Milieu d'enregistrement d'information et son appareil d'enregistrement/de reproduction

(30) Priority: 31.08.1988 JP 216511/88
(43) Date of publication of application: 07.03.1990
(60) Divisional application: 93109471.8
(73) Proprietor: MATSUSHITA ELECTRIC INDUSTRIAL CO., LTD., Kadoma-shi, Osaka-fu, 571 (JP)
(72) Inventor: Furutani, Tadashige, Ootsu-shi Shiga-ken (JP); Yoshida, Tomio, Katano-shi Osaka (JP); Koishi, Kenji, Kawabe-gun Hyogo-ken (JP)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- EP-A- 0 167 806
- DE-A- 3 728 857
- PATENT ABSTRACTS OF JAPAN vol. 14, no. 21 (P-990)(3964) 17 January 1990,& JP-A-12 63955 (MATSUSHITA ELECTRIC INDUSTRIAL CO.) 20 October 1989,

## Description

### Field of the Invention

This invention relates to an information recording medium such as an optical recording medium or an optical disk. This invention also relates to a recording and reproducing apparatus using such an information recording medium.

### Description of the Prior Art

Japanese published unexamined patent application 60-150130 discloses a way of managing a defective area or region of an information recording medium. In this prior art method, when the recording medium is used for the first time, that is, when the recording medium is formatted, initialized, or re-formatted, a defect managing region and a substitute region are defined in the recording medium. During the recording and reproducing data into and from the recording medium, when a defective sector is detected, a defect-representing mark is recorded into the defective sector. Then, a substitute sector corresponding to the defective sector is determined within the substitute region. After the determination of the substitute sector, data is recorded into and reproduced from the substitute sector in place of the defective sector. The relation between the addresses of the defective sector and the substitute sector are recorded into the defect managing region.

In the prior art way of Japanese patent application 60-150130, it is difficult to discriminate between early (initial) defective sectors and later defective sectors. The early defective sectors are defined as being already present when the recording medium is used for the first time. The later defective sectors occur after the information managing the early defective sectors is recorded into the defect managing region. All of the defective sectors are displaced by normal sectors within the common substitute region. Therefore, each time a defective sector is found, it is necessary to search the substitute region. This search lengthens the time spent in recording and reproducing data into and from the recording medium.

In the prior art way of DE-A-3728857 against which Claim 1 and 5 are delimited, an information processor for recording and reproducing information to and from a recording medium is disclosed in which a defect management is provided for defective regions which occur during the manufacture of the recording medium. In this prior art, when a defective region is detected, a substitute region is fetched from among predetermined substitute regions, the size of the predetermined substitute regions being fixed. However, the re-use of a recording medium which has been used once is not considered.

### SUMMARY OF INVENTION

It is an object of this invention to provide an information recording medium which allows an efficient management of defective sectors.

It is another object of this invention to provide a recording and reproducing apparatus using such an information recording medium.

According to one aspect of this invention an apparatus for recording and reproducing data from an information recording medium is provided which is divided up into a plurality of sectors comprising: means for registering any initial defective sectors into a first defect managing region of an information recording medium, said initial defective sectors being those sectors which were defective when the recording medium was last formatted; means for registering later defective sectors into a second defect managing region of the information recording medium, said later defective sectors being those sectors which have become defective since the recording medium was last formatted; and is characterised in that the apparatus further comprises means for recording identification information into each of the sectors belonging to the first or second defect managing regions, wherein the identification information allows sectors belonging to the first defect managing region to be distinguished from sectors belonging to the second defect managing region; means for reproducing the identification information ; and means for recording and erasing information into and from sectors of said first and/or said second defect managing region in accordance with the reproduced identification information.

The above apparatus may be advantageously further characterised in that the identification information of a particular sector is recordable into and reproducable from an identification information region which forms part of that sector, and in that, preferably, means are provided for recording and erasing the identification information so stored into and from any sector in accordance with the reproduced identification information.

It is particularly envisaged that the information recording medium be an optical recording medium such as an optical disk.

According to another aspect of this invention an information recording medium is provided which is divided up into a plurality of sectors comprising: a first defect managing region into which any initial defective sectors are registered, said initial defective sectors being those regions which were defective when the recording medium was last formatted; a second defect managing region into which later defective sectors are registered, said later defective sectors being those sectors which have become defective since the recording medium was last formatted; and is characterised in that the medium further comprises identification information present in each sector for identifying sectors belonging to the first or second defect managing region and from which sectors belonging to the first defect managing region are distinguishable from sectors belonging to the second defect managing region.

It is particularly envisaged that the information be an optical recording medium such as an optical disk.

### BRIEF DESCRIPTION OF THE DRAWINGS

Fig. 1 is a diagram of a format of an optical disk according to a first embodiment of this invention.

Fig. 2 is a diagram of a format of an optical disk according to a second embodiment of this invention.

Fig. 3 is a block diagram of a recording and reproducing apparatus according to a third embodiment of this invention.

Fig. 4 is a block diagram of a recording and reproducing apparatus according to a fourth embodiment of this invention.

Fig. 5 is a diagram showing the arrangement of various regions in the optical disk in the fourth embodiment.

Fig. 6 is a diagram showing the contents of a management table in the fourth embodiment.

Fig. 7 is a diagram showing the arrangement of various regions in an optical disk according to a fifth embodiment of this invention.

Fig. 8 is a block diagram of the first bit detector of Fig. 3.

Figs. 9-11 are flowcharts of programs operating the control section of Fig. 3.

Figs. 12-16 are flowcharts of programs operating the control section of Fig. 4.

Generally, like and corresponding elements are denoted by the same reference characters throughout the drawings.

### DESCRIPTION OF THE FIRST PREFERRED EMBODIMENT

In the case of a pre-formatted recording medium such an optical disk which has a large capacity and many sectors, it is uneconomical to prevent defects at a recording surface during the production of the recording medium. Therefore, during the use of such a recording medium, defects or defective regions less than a given quantity are allowed. A defective sector is defined as follows. Information can not be accurately reproduced from a defective sector after the information is recorded into the sector. Defective regions are caused by various factors such as faults, dust, and ageing of a recording medium. In general, sectors on a recording medium such as an optical disk are classified into normal sectors, early (initial) defective sectors, and later defective sectors. The early defective sectors are defined as being already present when the recording medium is used for the first time. The later defective sectors occur after the information managing the early defective sectors is recorded into the defect managing region. In this embodiment, a first defect managing region, a second defect managing region, and a user data region are prepared on the optical disk. The first defect managing region is used to store information related to the early defective sectors. The second defect managing region is used to store information related to the later defective sectors. This embodiment has the following advantage. Later defective regions in a recording medium tend to increase due to faults, dust, and ageing of the recording medium. Generally, this tendency is prominent in a replaceable recording medium. It is thus necessary to regard the number of later defective regions as an increasing variable number. When the second defect managing region is provided on a RAM, the RAM is generally required to have a large capacity for an increasing number of later defective regions. Since the number of early defective regions is fixed, a RAM of a small capacity can be used when the first defect managing region is provided on the RAM. Therefore, in cases where only the early defective regions are managed by use of a RAM, the RAM of a small capacity suffices.

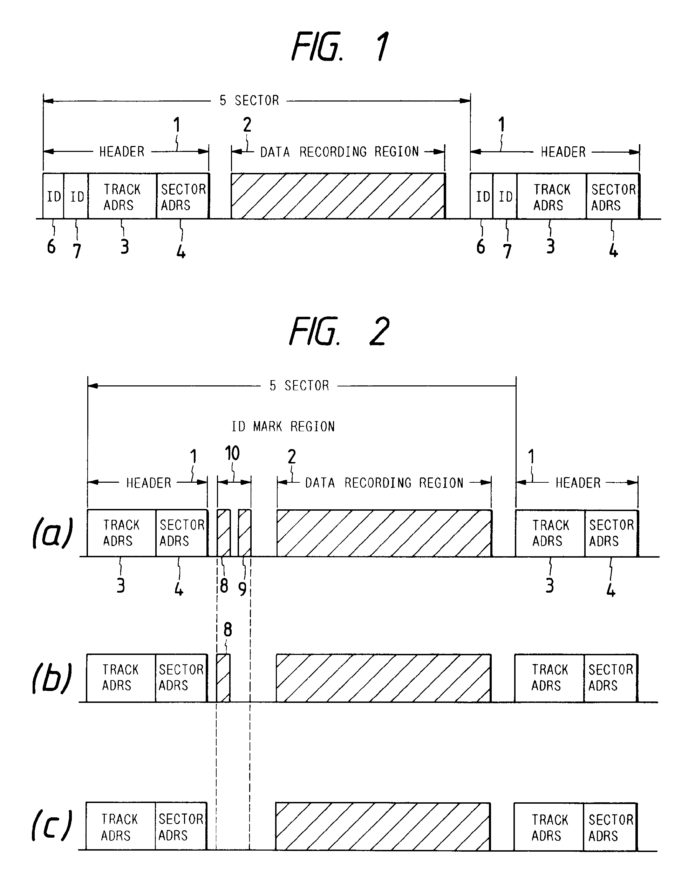

Fig. 1 shows a format of sectors on an optical disk according to a first embodiment of this invention. Each sector is a unit of the recording of information. As shown in Fig. 1, a sector 5 includes a header 1 which is formed by mastering during the manufacture of an optical disk. A data sequence recorded in the header 1 contains information related to a track address 3 and a sector address 4 representative of address information of the related sector. The track address 3 precedes the sector address 4. The data sequence recorded in the header 1 also contains information related to a first identification bit 6 and a second identification bit 7. The second identification bit 7 follows the first identification bit 6 but precedes the track address 3.

The sector 5 includes a data recording region or area 2 following the header 1. The data recording region 2 is used to store user data or information related to a defect managing region.

As described previously, sectors on the optical disk are classified into normal sectors, early (initial) defective sectors, and later defective sectors. The early defective sectors are defined as being already present when the optical disk is used for the first time. The later defective sectors occur after the information managing the early defective sectors is recorded into the defect managing region. In this embodiment, a first defect managing region, a second defect managing region, and a user data region are prepared on the optical disk. The first defect managing region is used to store information related to the early defective sectors. The second defect managing region is used to store information related to the later defective sectors.

As described previously, a front of the header 1 includes the first and second identification bits 6 and 7. The first identification bit 6 stores information representing whether the related sector 5 belongs to the user data region or the defect managing regions. The second identification bit 7 stores information representing whether the related sector 5 belongs to the first defect managing region or the second defect managing region.

When data is recorded into and reproduced from the sector 5, the header 1 is reproduced and the track address 3 and the sector address 4 are read out in order to confirm that the sector 5 agrees with a target sector for the data recording and reproducing. During the reproduction of the header 1, the first and second identification bits 6 and 7 are detected and the information recorded in these bits is derived. The information derived from the first identification bit 6 informs whether the sector 5 belongs to the user data region or the defect managing regions. The information derived from the second identification bit 7 informs whether the sector 5 belongs to the first defect managing region or the second defect managing region. Then, the data recording process, the data reproducing process, or the data erasing process is started.

In the case where the sector 5 belongs to the user data region, both of the first and second identification bits 6 and 7 are "0". In the case where the sector 5 belongs to the first defect managing region, both of the first and second identification bits 6 and 7 are "1". In the case where the sector 5 belongs to the second defect managing region, the first identification bit 6 is "1" and the second identification bit 7 is "0".

As understood from the previous description, a reliable detection can be made as to whether a sector belongs to the user data region, the first defect managing region, or the second defect managing region.

The first and second identification bits 6 and 7 may be exchanged in position. The first and second identification bits 6 and 7 may be placed in any part of the header 1. A plurality of bits may be used in place of each of the first and second identification bits 6 and 7. The first and second identification bits 6 and 7 may be replaced by a flag having a pre-formatted bit sequence which represents whether the related sector 5 belongs to the user data region, the first defect managing region, or the second defect managing region. The first and second identification bits 6 and 7 may be replaced by a track address and a sector address which contain bits representing whether the related sector 5 belongs to the user data region, the first defect managing region, or the second defect managing region.

### DESCRIPTION OF THE SECOND PREFERRED EMBODIMENT

Fig. 2 shows a format of sectors on an optical disk according to a second embodiment of this invention which is similar to the embodiment of Fig. 1 except for the following design changes.

As shown in Fig. 2, a sector 5 includes a header 1 composed of a track address 3 and a sector address 4 only. The sector 5 also includes an identification mark region 10 and a data recording region 2. The identification mark region 10 extends between the header 1 and the data recording region 2. A first identification mark 8 and a second identification mark 9 can be recorded in respective sections of the identification mark region 10.

In the case where the sector 5 belongs to a first defect managing region, both of the first and second identification marks 8 and 9 are recorded in the identification mark region 10 as shown in the part (a) of Fig. 2. In the case where the sector 5 belongs to a second defect managing region, only the first identification mark 8 is recorded in the identification mark region 10 as shown in the part (b) of Fig. 2. In the case where the sector 5 belongs to a user data region, neither the first identification mark 8 nor the second identification mark 9 is recorded in the identification mark region 10 as shown in the part (c) of Fig. 2.

When data is recorded into and reproduced from the sector 5, detection is made as to whether the first and second identification marks 8 and 9 are present in or absent from the identification mark region 10. The detection related to the first identification mark 8 informs whether the sector 5 belongs to the user data region or the defect managing regions. The detection related to the second identification mark 9 informs whether the sector 5 belongs to the first defect managing region or the second defect managing region.

At first, the first defect managing region is prepared on the optical disk. Early defective sectors which were already present at the preparation of the first defect managing region are registered into the first defect managing region. Thereafter, each time a later defective sector is newly found, a sector subsequent to the first defect managing region is set as a segment of a second defect managing region and the later defective sector is registered into the segment of the second defect managing region. The second defect managing region is expanded as the later defective sector is found. It is thus unnecessary to prepare the second defect managing region by the pre-formatting, so that the sectors can be used efficiently and the user data region can be large.

The identification mark region 10 may follow the data recording region 2. Three different marks may be recorded in the identification mark region 10.

### DESCRIPTION OF THE THIRD PREFERRED EMBODIMENT

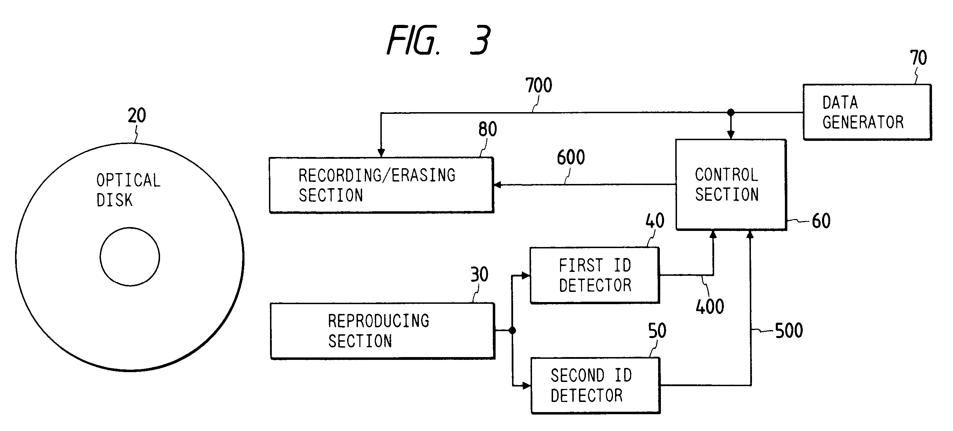

Fig. 3 shows a recording and reproducing apparatus according to a third embodiment of this invention. In Fig. 3, an optical disk 20 is formed with sectors of a format of Fig. 1. A reproducing section 30 reproduces information from the sectors on the optical disk 20. A detector 40 detects a first identification bit 6 (see Fig. 1) of a header 1 by referring to an output signal from the reproducing section 30. The detector 40 outputs a detection signal 400 when the first identification bit 6 is " 1". A detector 50 detects a second identification bit 7 (see Fig. 1) of a header 1 by referring to the output signal from the reproducing section 30. The detector 50 outputs a detection signal 500 when the second identification bit 7 is "1".

The first and second identification bits 6 and 7 are prepared during the manufacture of the optical disk 20. In addition, first and second defect managing regions and a user data region are predetermined during the manufacture of the optical disk 20. The positions of the first and second defect managing regions can not be changed later.

A control section 60 generates an inhibition signal 600 on the basis of the detection signals 400 and 500 from the detectors 40 and 50. The control section 60 is composed of a microcomputer including a combination of an input port, an output port, a ROM, a RAM, and a CPU. The control section 60 operates in accordance with a program stored in the ROM.

A data generator 70 outputs a recording/erasing data signal 700 to the control section 60 and a recording/erasing section 50. The recording/erasing section 80 records and erases data into and from the data recording region 2 (see Fig. 1) of a sector in accordance with the recording/erasing data signal 700. When the recording/erasing section 80 receives the inhibition signal 600 from the control section 60, the recording/erasing section 80 suspends the data recording and erasing.

The area of the optical disk 20 is divided into the first defect managing region, the second defect managing region, and the user data region. In cases where the optical disk 20 is used for the first time, that is, in cases where the optical disk 20 is formatted, initialized, or re-formatted, when defective sectors are present in the first and second defect managing regions, a defect-representing mark is recorded into the data recording region 2 (see Fig. 1) of each of the defective sectors but corresponding substitute sectors are not prepared.

During a subsequent stage, detection is made as to whether each of sectors in the user data region is normal or defective. When a defective sector is detected, a substitute region is prepared within the user data region. A substitute sector is searched from the substitute region. The address information of the defective sector and the address information of the substitute sector are sequentially recorded into normal sectors of the first defect managing region. Specifically, a pair of the address information of the defective sector and the address information of the substitute sector is set as data in the data generator 70. This data is transmitted from the data generator 70 to the recording/erasing section 50 by use of the recording/erasing data signal 700, and the data is recorded into the optical disk 20 by the recording/erasing section 80. In a later use of the optical disk 20, the recording of the data into the first defect managing region is inhibited.

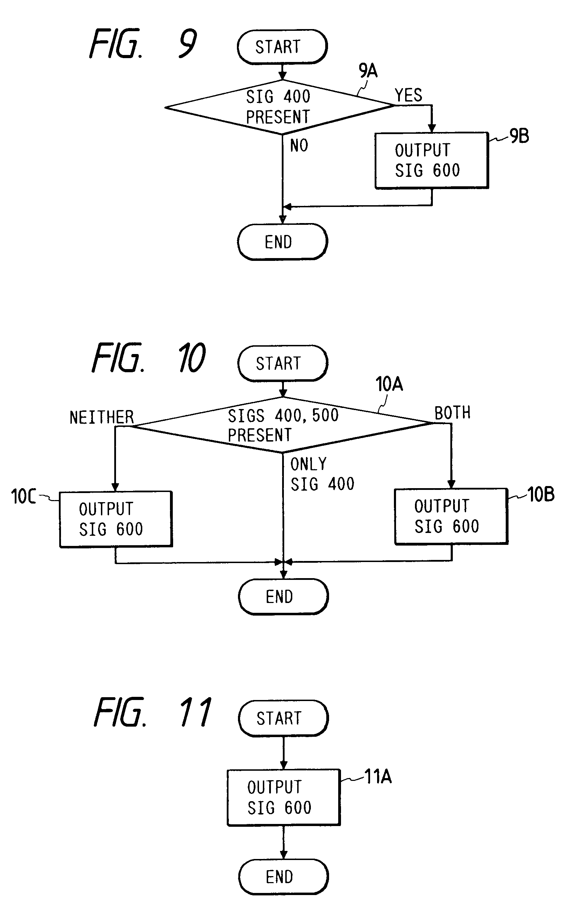

In cases where the user requires data to be recorded into the data recording region 2 (see Fig. 1) of a sector, after the information in the first and second defect managing regions is checked, the reproducing section 30 reproduces information from a sector on the optical disk 20. The reproduced information is transmitted from the reproducing section 30 to the detectors 40 and 50. When the detector 40 detects that the first identification bit 6 (see Fig. 1) is "1", the detector 40 outputs the detection signal 400 to the control section 60. When the detector 50 detects that the second identification bit 7 (see Fig. 1) is "1", the detector 50 outputs the detection signal 500 to the control section 60. In the absence of a detection signal 400, the control section 60 detects or recognizes that the current sector belongs to the user data region. In the presence of a detection signal 400, the control section 60 recognizes that the current sector belongs to one of the first and second defect managing regions. In the latter case, when a detection signal 500 is present, the control section 60 recognizes that the current sector belongs to the first defect managing region. In the latter case, when a detection signal 500 is absent, the control section 60 recognizes that the current sector belongs to the second defect managing region. When the control section 60 recognizes that the current sector belongs to one of the first and second defect managing regions, the control section 60 outputs an inhibition signal 600 to the recording/erasing section 80. Although data is fed from the data generator 70 to the recording/erasing section 80 by use of the recording/erasing data signal 700, the recording/erasing section 80 inhibits the recording of the data into the data recording region 2 (see Fig. 1) of the current sector in response to the inhibition signal. In these cases, the control section 60 operates in accordance with a program whose flowchart is shown in Fig. 9. As shown in Fig. 9, a first step 9A of the program judges whether the detection signal 400 is present or absent. When the detection signal 400 is present, the program advances from the step 9A to a step 9B. When the detection signal 400 is absent, the current execution cycle of the program ends. The step 9B outputs an inhibition signal 600. After the step 9B, the current execution cycle of the program ends.

In cases where user data is erased from the data recording region 2 (see Fig. 1) of a sector, the recording and reproducing apparatus operates in a manner basically similar to the operation during the recording of data but the recording/erasing section 80 does not inhibit the data erasing.

During the use of the optical disk 20 by the user, when a defective sector is detected, the address information of the defective sector and the address information of a corresponding substitute sector are recorded into the second defect managing region. The operation of the control section 60 and the data generator 70 in this case differs from that during the data recording as follows. In the presence of a detection signal 400 but the absence of a detection signal 500, the control section 60 recognizes that the current sector belongs to the second defect managing region. The data generator 70 outputs the address of the defective sector and the address of the substitute sector to the recording/erasing section 80 by use of the recording/erasing data signal 700. The recording/erasing section 80 records the address information of the defective sector and the address information of the substitute sector into the data recording region 2 (see Fig. 1) of the current sector. In the absence of both of the detection signals 400 and 500, the control section 60 recognizes that the current sector belongs to the user data region. In the presence of both of the detection signals 400 and 500, the control section 60 recognizes that the current sector belongs to the first defect managing region. When the control section 60 recognizes that the current sector belongs to the user data region or the first defect managing region, the control section 60 outputs an inhibition signal 600 to the recording/erasing section 80 so that the recording/erasing section 80 inhibits the recording of the address information of the defective sector and the address information of the substitute sector into the data recording region 2 (see Fig. 1) of the current sector. In this case, the control section 60 operates in accordance with a program whose flowchart is shown in Fig. 10. As shown in Fig. 10, a first step 10A of the program judges whether the detection signals 400 and 500 are present or absent. When both of the detection signals 400 and 500 are present, the program advances from the step 10A to a step 10B. When both of the detection signals 400 and 500 are absent, the program advances from the step 10A to a step 10C. When only the detection signal 400 is present, the current execution cycle of the program ends. The steps 10B and 10C outputs an inhibition signal 600. After the steps 10B and 10C, the current execution cycle of the program ends.

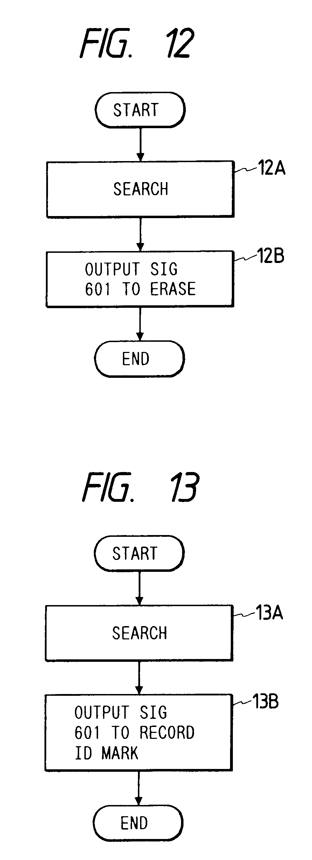

During the reproduction of data from and the search of data in the user data region and the first and second defect managing regions, after the information in the first and second defect managing regions is checked, the reproducing section 30 reproduces information from a sector on the optical disk 20. The reproduced information is transmitted from the reproducing section 30 to the detectors 40 and 50. When the detector 40 detects that the first identification bit 6 (see Fig. 1) is "1", the detector 40 outputs the detection signal 400 to the control section 60. When the detector 50 detects that the second identification bit 7 (see Fig. 1) is "1", the detector 50 outputs the detection signal 500 to the control section 60. In the absence of a detection signal 400, the control section 60 detects or recognizes that the current sector belongs to the user data region. In the presence of a detection signal 400, the control section 60 recognizes that the current sector belongs to one of the first and second defect managing regions. In the latter case, when a detection signal 500 is present, the control section 60 recognizes that the current sector belongs to the first defect managing region. In the latter case, when a detection signal 500 is absent, the control section 60 recognizes that the current sector belongs to the second defect managing region. The control section 60 outputs an inhibition signal 600 to the recording/erasing section 80 independent of the presence and absence of the detection signals 400 and 500 so that the recording/erasing section 80 continues to inhibit the data recording and the data erasing. In this case, the control section 60 operates in accordance with a program whose flowchart is shown in Fig. 11. As shown in Fig. 11, a first step 11A of the program outputs an inhibition signal 600. After the step 11A, the current execution cycle of the program ends.

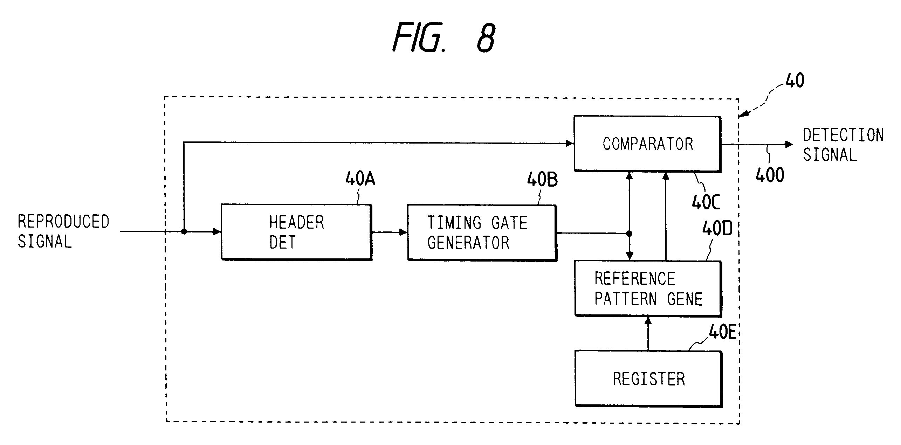

As shown in Fig. 8, the detector 40 includes a header detecting section 40A detecting the header 1 (see Fig. 1) of a sector from the output signal of the reproducing section 30 (see Fig. 3). A timing gate generator 40B generates a timing gate signal in response to an output signal from the header detecting section 40A. The moment of the occurrence of the timing gate signal matches to a timing at which the output signal from the reproducing section 30 (see Fig. 3) represents the first identification bit 6 (see Fig. 1). The timing gate signal is fed from the timing gate generator 40B to a comparator 40C and a reference pattern generator 40D. The reference pattern generator 40D transmits a signal representative of a reference pattern from a register 40E to the comparator 40C in response to the timing gate signal. The reference pattern corresponds to "1". The comparator 40C receives the output signal from the reproducing section 30 (see Fig. 3). The comparator 40C is informed by the output signal from the reproducing section 30 (see Fig. 3) of the pattern of the first identification bit 6 (see Fig. 1) in the sector at a timing determined by the timing gate signal. The comparator 40C compares the pattern of the first identification bit with the reference pattern at a timing determined by the timing gate signal. When the pattern of the first identification bit agrees with the reference pattern, the comparator 40C outputs a detection signal 400.

The detector 50 has a design similar to the design of Fig. 8. In the detector 50, a timing gate generator 40B outputs a timing gate signal having a timing corresponding to a timing at which the output signal from the reproducing section 30 (see Fig. 3) represents the second identification bit 7 (see Fig. 1) of a sector.

The first and second identification bits 6 and 7 (see Fig. 1) may be replaced by an identification flag. In this case, the detectors 40 and 50 are replaced by an identification flag detector.

### DESCRIPTION OF THE FOURTH PREFERRED EMBODIMENT

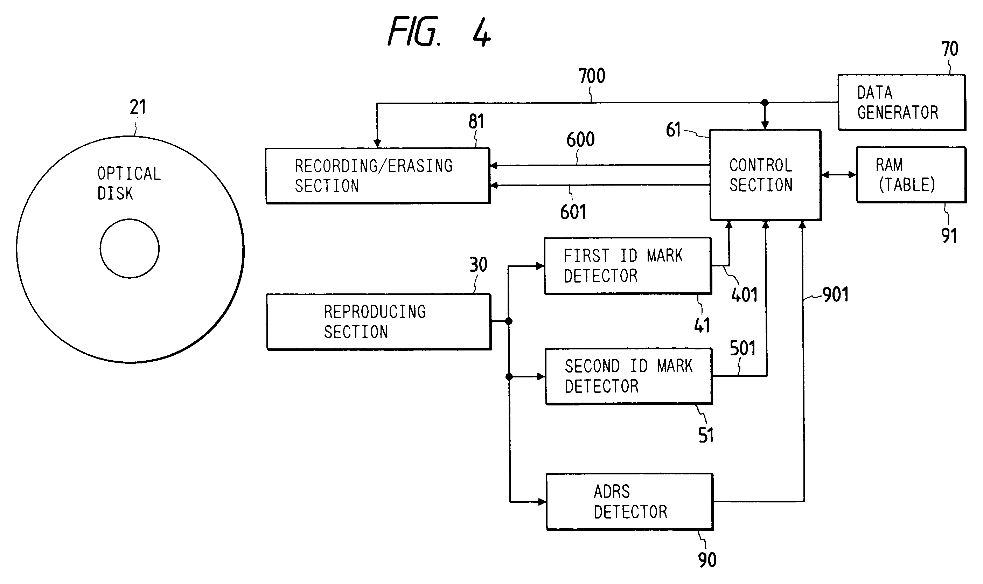

Fig. 4 shows a recording and reproducing apparatus according to a fourth embodiment of this invention. In Fig. 4, an optical disk 21 is formed with sectors of a format of Fig. 2. A reproducing section 30 reproduces information from the sectors on the optical disk 21. A detector 41 detects a first identification mark 8 (see Fig. 2) in an identification mark region 10 by referring to an output signal from the reproducing section 30. The detector 41 outputs a detection signal 401 when the first identification mark 8 is present. A detector 51 detects a second identification mark 9 (see Fig. 2) in the identification mark region 10 by referring to the output signal from the reproducing section 30. The detector 51 outputs a detection signal 501 when the second identification mark 9 is present.

A control section 61 generates an inhibition signal 600 and a mark recording/erasing signal 601 on the basis of the detection signals 401 and 501 from the detectors 41 and 51. A RAM 91 connected to the control section 61 stores a management table. The control section 61 manages two defective managing regions and a user data region by use of an address signal 901 and the management table. The control section 61 is composed of a microcomputer including a combination of an input port, an output port, a ROM, a RAM, and a CPU. The control section 61 operates in accordance with a program stored in the ROM.

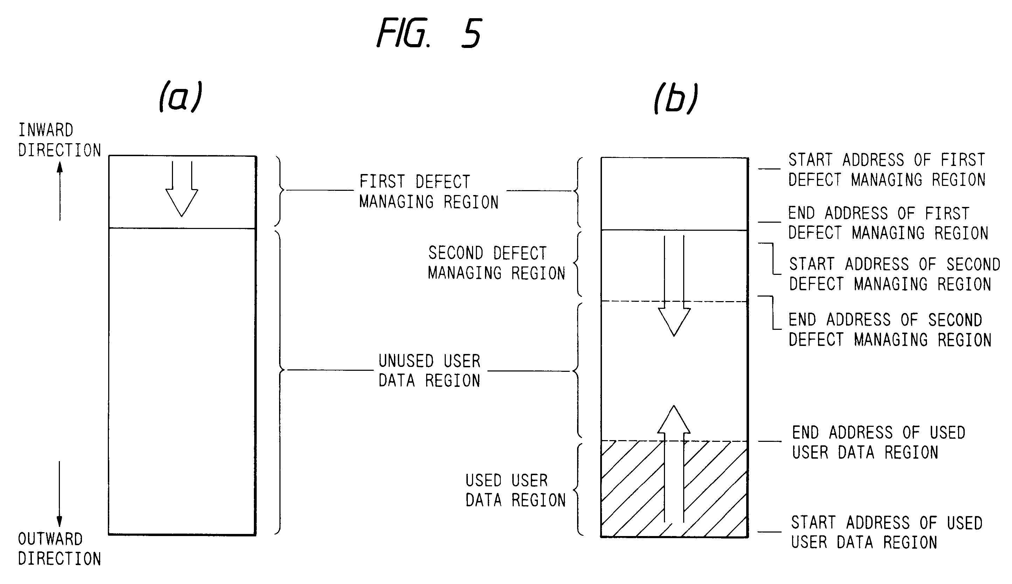

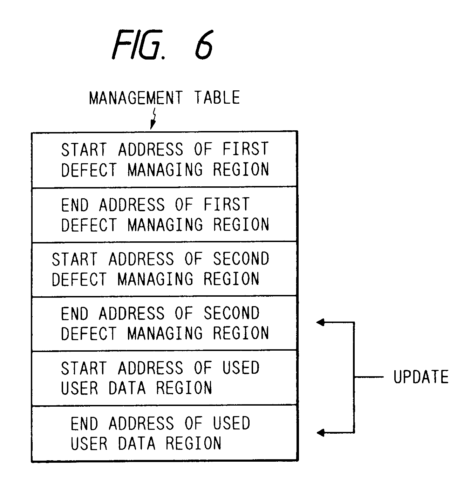

The management table in the RAM 91 holds a start address and an end address of a first defect managing region, a start address and an end address of a second defect managing region, and a start address and an end address of a used user data region of the part (b) of Fig. 5. Information of the management table is recorded in the optical disk 21. Each time the optical disk 21 is used, the information of the management table is read out from the optical disk 21 and is updated. As shown in Fig. 6, the management table is divided into segments for storing the start address and the end address of the first defect managing region, the start address and the end address of the second defect managing region, and the start address and the end address of the used user data region respectively. After a recording process, the end address of the second defect managing region and the end address of the used user data region are updated if necessary.

A data generator 70 outputs a recording/erasing data signal 700 to the control section 61 and an recording/erasing section 81. The recording/erasing section 81 records and erases data into and from the data recording region 2 (see Fig. 2) of a sector in accordance with the recording/erasing data signal 700. When the recording/erasing section 81 receives the inhibition signal 600 from the control section 61, the recording/erasing section 81 suspends the data recording and erasing. When the recording/erasing section 81 receives the mark recording/erasing signal 601 of a given state from the control section 61, the recording/erasing section 81 records an identification mark or marks into the identification mark region 10 (see Fig. 2) of a sector in accordance with the contents of the mark recording/erasing signal 601. The mark recording/erasing signal 601 is preferably a two-bit digital signal changeable among three different states. A first state of the mark recording/erasing signal 601 commands the recording/erasing section 81 to record both of the first and second identification marks 8 and 9 (see Fig. 2) into the identification mark region 10 of a sector. A second state of the mark recording/erasing signal 601 commands the recording/erasing section 81 to record the first identification mark 8 (see Fig. 2) into the identification mark region 10 of a sector and to erase the second identification mark 9 (see Fig. 2) from the identification mark region 10 of the sector. A third state of the mark recording/erasing signal 601 commands the recording/erasing section 81 to erase both of the first and second identification marks 8 and 9 (see Fig. 2) from the identification mark region 10 of a sector.

A detector 90 detects a track address 3 and a sector address 4 (see Fig. 2) in the header 1 of a sector by referring to the output signal from the reproducing section 30. The detector 90 outputs the detected address information to the control section 61 by use of an address signal 901.

The area of the optical disk 21 is divided into a first defect managing region, a second defect managing region, a used user data region, and an unused user data region. When the optical disk 21 is used for the first time, that is, when the optical disk 21 is formatted, initialized, or re-formatted, the contents of the identification mark region 10 (see Fig. 2) of each sector are erased as follows. After a searching process, the control section 61 outputs the mark recording/erasing signal of the third state to the recording/erasing section 81 so that the recording/erasing section 81 erases the first and second identification marks from the identification mark region 10 of each sector. In this case, the control section 61 operates in accordance with a program whose flowchart is shown in Fig. 12. As shown in Fig. 12, a first step 12A of the program searches a target sector. A step 12B following the step 12A outputs the mark recording/erasing signal 601 of the third state. After the step 12B, the current execution cycle of the program ends. Then, a check is made as to whether or not each of the sectors is defective. Each time a defective sector is found, a substitute region is prepared within the user data region and a substitute sector is prepared within the substitute region. The address information of the defective sector, the address information of the corresponding substitute sector, and the information of the identification marks are recorded into a normal sector. This normal sector forms a part of the first defect managing region. As shown in the part (a) of Fig. 5, inner sectors are sequentially used as forming the first defect managing region. As shown in the part (a) of Fig. 2, both of the first and second identification marks 8 and 9 are recorded in the identification mark region 10 of each sector in the first defect managing region. The first defect managing region is formed as follows. After a searching process, a pair of the address information of the defective sector and the address information of the substitute sector is set as data in the data generator 70. This data is transmitted from the data generator 70 to the recording/erasing section 81 by use of the recording/erasing data signal 700, and the data is recorded into an intended sector on the optical disk 21 by the recording/erasing section 81. At the same time, the control section 61 outputs the mark recording/erasing signal 601 of the first state to the recording/erasing section 81 so that the recording/erasing section 81 records both of the first and second identification marks 8 and 9 (see Fig. 2) into the identification mark region 10 of the intended sector. In this case, the control section 61 operates in accordance with a program whose flowchart is shown in Fig. 13. As shown in Fig. 13, a first step 13A of the program searches a sector into which defect managing information should be recorded. A step 13B following the step 13A outputs the mark recording/erasing signal 601 of the first state. After the step 13B, the current execution cycle of the program ends. As shown in the part (a) of Fig. 5, at the first use of the optical disk 21, the area of the optical disk 21 is composed of a first defect managing region and a unused user data region. The first defect managing region extends inward of the unused user data region. An inner part of the unused user data region is used as a second defect managing region later. The first defect managing region keeps unchanged during the subsequent use of the optical disk 21 by the user.

During the use of the optical disk 21 by the user which follows the previously-mentioned first use of the optical disk 21, when a defective sector is found, a substitute region is prepared and a substitute sector is prepared within the substitute region. The address information of the defective sector, the address information of the corresponding substitute sector, and the information of the identification marks are recorded into a normal sector. This normal sector forms a part of the second defect managing region. As understood from the comparison between the parts (a) and (b) of Fig. 5, inner sectors of the unused user data region are sequentially used as forming the second defect managing region. Therefore, the second defect managing region extends outward of the first defect managing region but inward of the remaining unused user data region. As shown in the part (b) of Fig. 2, only the first identification mark 8 is recorded in the identification mark region 10 of each sector in the second defect managing region. As shown in the part (b) of Fig. 5, inner sectors of the unused user data region are sequentially used to expand the second defect managing region while outer sectors of the unused user data region are sequentially used for the intended data recording purpose.

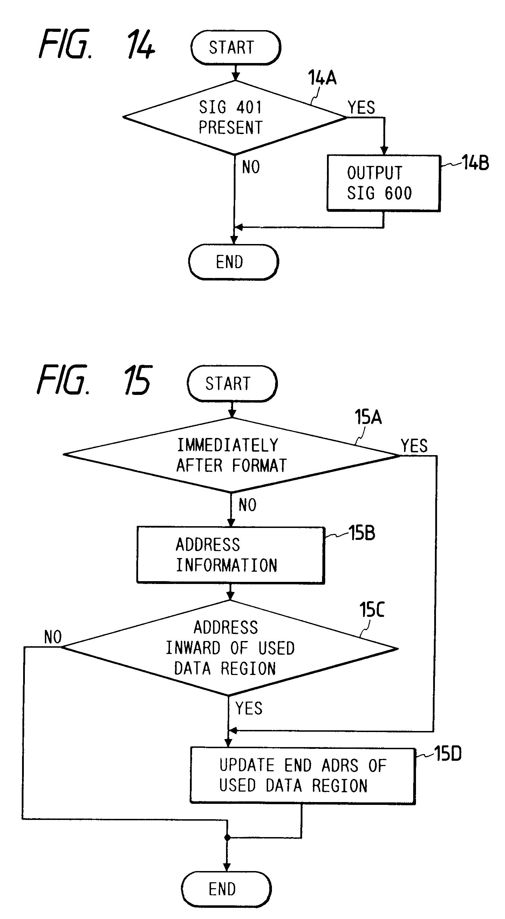

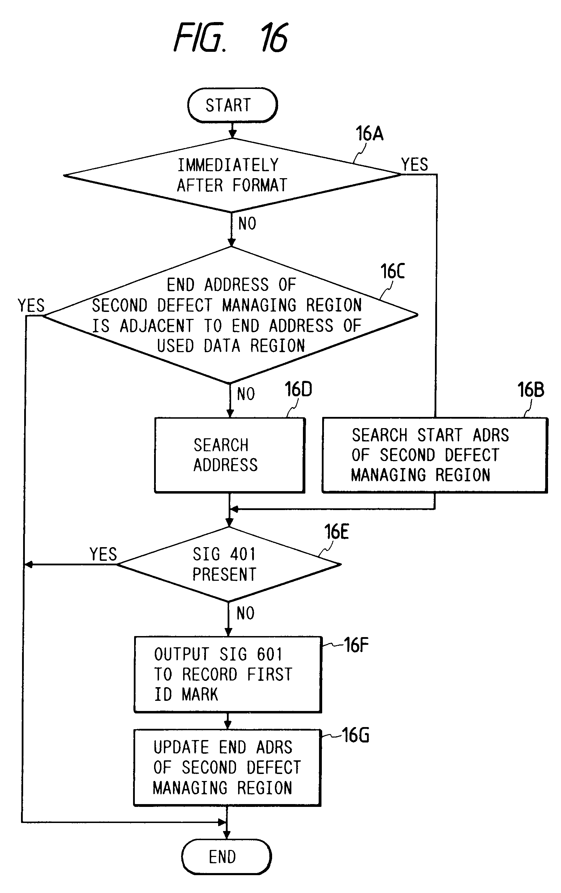

In cases where user data is required to be recorded into the data recording region 2 (see Fig. 2) of a sector, after the information in the first and second defect managing regions is checked, the reproducing section 30 reproduces information from the sector on the optical disk 21. The reproduced information is transmitted from the reproducing section 30 to the detectors 41 and 51. When the detector 41 detects the presence of a first identification mark 8 (see Fig. 2) in the identification mark region 10 of the sector, the detector 41 outputs the detection signal 401 to the control section 61. When the detector 51 detects the presence of a second identification mark 9 (see Fig. 2) in the identification mark region 10 of the sector, the detector 51 outputs the detection signal 501 to the control section 61. The reproduced information is also transmitted from the reproducing section 30 to the detector 90. The detector 90 detects a track address 3 and a sector address 4 in the header 1 of the sector and outputs the address signal 901 representative of the detected address information to the control section 61. In the absence of a detection signal 401, the control section 61 detects or recognizes that the current sector belongs to the user data region. In the presence of a detection signal 401, the control section 61 recognizes that the current sector belongs to one of the first and second defect managing regions. In the latter case, when a detection signal 501 is present, the control section 61 recognizes that the current sector belongs to the first defect managing region. In the latter case, when a detection signal 501 is absent, the control section 61 recognizes that the current sector belongs to the second defect managing region. When the control section 61 recognizes that the current sector belongs to one of the first and second defect managing regions, the control section 61 outputs an inhibition signal 600 to the recording/erasing section 81. Although data is fed from the data generator 70 to the recording/erasing section 81 by use of the recording/erasing data signal 700, the recording/erasing section 81 inhibits the recording of the data into the data recording region 2 (see Fig. 2) of the current sector in response to the inhibition signal 600. Since these cases do not correspond to the recording of data into the first defect managing region, the control section 61 does not output a mark recording/erasing signal 601. In these cases, the control section 61 operates in accordance with a program whose flowchart is shown in Fig. 14. As shown in Fig. 14, a first step 14A of the program judges whether the detection signal 401 is present or absent. When the detection signal 401 is present, the program advances from the step 14A to a step 14B. When the detection signal 401 is absent, the current execution cycle of the program ends. The step 14B outputs the inhibition signal 600. After the step 14B, the current execution of the program ends. When the user requires data to be recorded into the optical disk 21, the control section 61 derives the address information from the address signal 901 and then examines the derived address information. Specifically, the control section 61 compares the derived address information with the end address of a used user data region which is stored in the management table in the RAM 91. This address comparison is to determine whether or not the current sector extends inward of the used user data region. When the current sector extends inward of the used user data region, the end address of the used user data region is updated by use of the current address information. In the case where the user requires the recording of data into the optical disk 21 immediately after the formatting of the optical disk 21, since the start address of a used user data region is determined but the end address of the used user data region is indefinite, the end address of the used user data region is always updated. During the recording of the data into the optical disk 21, the control section 61 operates in accordance with a program whose flowchart is shown in Fig. 15. As shown in Fig. 15, a first step 15A judges whether or not the current moment immediately follows the formatting. When the current moment does not immediately follow the formatting, the program advances from the step 15A to a step 15B. When the current moment immediately follows the formatting, the program jumps from the step 15A to a step 15D. The step 15B derives the address information from the address signal 901. A step 15C subsequent to the step 15B compares the derived address information with the end address of the used user data region. When the derived address information extends inward of the end address of the used user data region, the program advances from the step 15C to the step 15D. Otherwise, the current execution cycle of the program ends. The step 15D updates the end address of the used user data region by use of the derived address information. After the step 15D, the current execution cycle of the program ends.

In cases where user data is erased from the data recording region 2 (see Fig. 2) of a sector, the recording and reproducing apparatus operates in a manner basically similar to the operation during the recording of data but the recording/erasing section 81 inhibits wrong erasing of data. In these cases, the end address of the used user data region which is stored in the management table in the RAM 91 is not updated.

During the use of the optical disk 21 by the user, when a defective sector is detected, the address information of the defective sector and the address information of a corresponding substitute sector are recorded into the second defect managing region as follows. The control section 61 examines the end address of the second defect managing region and the end address of the used user data region which are stored in the management table in the RAM 91. When the end address of the second defect managing region and the end address of the used user data region are adjacent to each other, there is no unused user data region so that the recording of the address information is inhibited. Otherwise, the recording of the address information is allowed as follows. The control section 61 checks the address information of the address signal 901 and simultaneously searches the address of an innermost part of the unused user data region which extends adjacently outward of the end address of the second defect managing region. At the same time, the control section 61 checks the presence and absence of the detection signals 401 and 501. During the search, at a moment immediately after the formatting of the optical disk 21, the second defect managing region is not yet formed and the end address of the second defect managing region which is stored in the management table in the RAM 91 is indefinite. The searched address of the innermost part of the unused user data region is defined as the start address of the second defect managing region. In the absence of the detection signal 401, the following operation is performed. After one revolution of the optical disk 21 is waited, the control section 61 outputs the mark recording/erasing signal 601 of the second state to the recording/erasing section 81 but does not output the inhibition signal 600. The data generator 70 outputs the address of the defective sector and the address of the corresponding substitute sector to the recording/erasing section 81 by use of the recording/erasing data signal 700. As a result, the recording/erasing section 81 records only the first identification mark 8 (see Fig. 2) into the identification mark region 10 of the sector and also records the address of the defective sector and the address of the corresponding substitute sector into the data recording region 2 (see Fig. 2) of the sector. In this way, the second defect managing region is formed. The control section 61 updates the end address of the second defect managing region in the management table by use of the recorded address information. In these cases, the control section 61 operates in accordance with a program whose flowchart is shown in Fig. 16. As shown in Fig. 16, a first step 16A of the program judges whether or not the current moment immediately follows the formatting. When the current moment immediately follows the formatting, the program advances from the step 16A to a step 16B. When the current moment does not immediately follow the formatting, the program advances from the step 16A to a step 16C. The step 16B searches the start address of the second defect managing region. After the step 16B, the program advances to a step 16E. The step 16C judges whether or not the end address of the second defect managing region and the end address of the used user data region are adjacent to each other. When the two end address are not adjacent to each other, the program advances from the step 16C to a step 16D. When the two end addresses are adjacent to each other, the current execution cycle of the program ends. The step 16D searches the address of the unused user data region which extends adjacently outward of the end address of the second defect managing region. After the step 16D, the program advances to the step 16E. The step 16E judges whether the detection signal 401 is present or absent. When the detection signal 401 is absent, the program advances from the step 16E to a step 16F. When the detection signal 401 is absent, the current execution cycle of the program ends. The step 16F outputs the mark recording/erasing signal 601 of the second state. A step 16G subsequent to the step 16F updates the end address of the second defect managing region by use of the address given in the previous step 16D. After the step 16G, the current execution cycle of the program ends.

During the reproduction of data from and the search of data in the user data range and the first and second defect managing regions, after the information in the first and second defect managing regions is checked, the reproducing section 30 reproduces information from a sector on the optical disk 21. The reproduced information is transmitted from the reproducing section 30 to the detectors 41 and 51. When the detector 41 detects the presence of the first identification mark 8 (see Fig. 2), the detector 41 outputs the detection signal 401 to the control section 61. When the detector 51 detects the presence of the second identification mark 9 (see Fig. 2), the detector 51 outputs the detection signal 501 to the control section 61. In the absence of a detection signal 401, the control section 61 detects or recognizes that the current sector belongs to the user data region. In the presence of a detection signal 401, the control section 61 recognizes that the current sector belongs to one of the first and second defect managing regions. In the latter case, when a detection signal 501 is present, the control section 61 recognizes that the current sector belongs to the first defect managing region. In the latter case, when a detection signal 501 is absent, the control section 61 recognizes that the current sector belongs to the second defect managing region. The control section 61 outputs an inhibition signal 600 to the recording/erasing section 81 but does not output a mark recording/erasing signal 601 to the recording/erasing section 81 independent of the presence and absence of the detection signals 401 and 501, so that the recording/erasing section 81 continues to inhibit the data recording and the data erasing. In this case, the control section 61 operates in accordance with a program whose flowchart is similar to the flowchart of Fig. 11.

The detector 41 has a design similar to the design of Fig. 8. In the detector 41, a timing gate generator 40B outputs a timing gate signal having a timing corresponding to a timing at which the output signal from the reproducing section 30 (see Fig. 4) can represent the first identification mark 8 (see Fig. 2) of a sector.

The detector 51 has a design similar to the design of Fig. 8. In the detector 51, a timing gate generator 40B outputs a timing gate signal having a timing corresponding to a timing at which the output signal from the reproducing section 30 (see Fig. 4) can represent the second identification mark 9 (see Fig. 2) of a sector.

The used user data region and the set of the first and second defect managing regions may be exchanged in position.

### DESCRIPTION OF THE FIFTH PREFERRED EMBODIMENT

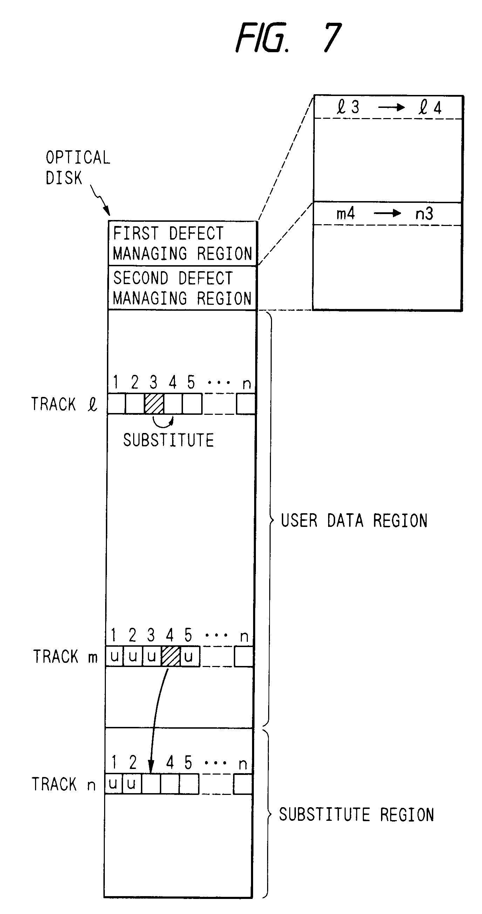

Fig. 7 relates to a fifth embodiment of this invention which is similar to the embodiment of Fig. 3 or the embodiment of Figs. 4-6 except for the following designs.

As shown in Fig. 7, the area of an optical disk is divided into a first defect managing region, a second defect managing region, a user data region, and a substitute region. The optical disk has tracks each composed of an n-number of sectors.

When the optical disk is used for the first time, that is, when the optical disk is formatted, initialized, or re-formatted, the respective regions are arranged in the optical disk as follows. The first and second defect managing regions are formed on the optical disk. The area of the optical disk which is not occupied by the first and second defect managing regions is used as the user data region. A check is made as to whether or not each of the sectors on the optical disk is defective. A control section 60 or 61 (see Fig. 3 or Fig. 4) enables this check by recording suitable data into the sector, then examining whether or not the data can be reproduced from the sector, and finally judging whether or not the reproduced data agrees with the recorded data. A substitute sector is not prepared for a defective sector in the first and second defect managing regions, and a defect-representing mark is recorded into the data recording region 2 (see Fig. 1 or Fig. 2) of the defective sector. A sector immediately following a defective sector in the user data region is used as a substitute sector for the defective sector, and a defect-representing mark is recorded into the data recording region 2 (see Fig. 1 or Fig. 2) of the defective sector. The adjacent positions of the defective sector and the corresponding substitute sector allow a shorter time spent in the substituting process. The address information of the defective sector and the address information of the corresponding substitute sector are detected, and the detected address information is recorded into the first defect managing region. In an example where the sector "3" of the track "ℓ" is defective as shown in Fig. 7, the sector "4" of the track "ℓ" is used as a substitute sector for the defective sector. In this example, the information " ℓ3 → ℓ4" which represents that the sector "3" of the track "ℓ" is replaced by the sector "4" of the track "ℓ" is recorded into the first defect managing region. When the substitute sector is defective, a substitute sector for the defective substitute sector is prepared. In a last track, if a substitute sector for a defective sector can not be prepared, the preparation of the substitute sector is abandoned. When the previously-mentioned substituting process is completed, all of defective sectors are registered in the first defect managing region. Defective sectors in the user data region are replaced by substitute sectors adjacent to the defective sectors. The substituting process is performed via the control section 60 or 61 (see Fig. 3 or Fig. 4).

When the formatting of the optical disk is completed, a substitute region is prepared for defective sectors which occur later. The later defective sectors are replaced by sectors in the substitute region. A substitute sector is not prepared for a defective sector in the first and second defect managing regions, and a defect-representing mark is recorded into the data recording region 2 (see Fig. 1 or Fig. 2) of the defective sector. When a defective sector is found in the substitute region or the user data region, a defect-representing mark is recorded into the data recording region 2 (see Fig. 1 or Fig. 2) of the defective sector and a corresponding substitute sector is prepared in the substitute region. In this case, the address information of the defective sector and the address information of the corresponding substitute sector are recorded into the second defect managing region. In an example where the sector "4" of the track "m" is defective as shown in Fig. 7, the sector "3" of the track "n" is used as a substitute sector for the defective sector. In this example, the information "m4 → n3" which represents that the sector "4" of the track "m" is replaced by the sector "3" of the track "n" is recorded into the second defect managing region.

While a substitute sector for an early defective sector is adjacent to the defective sector in this embodiment, a substitute sector may be another sector within a track containing the defective sector.

### DESCRIPTION OF OTHER PREFERRED EMBODIMENTS

This invention can be applied to a pre-formatted disc-shaped medium, a pre-formatted card-shaped medium such as an optical card, and an information recording medium including a semiconductor disk using a RAM.

## Claims

1. Apparatus for recording and reproducing data from an information recording medium divided up into a plurality of sectors (5) comprising
means for registering any initial defective sectors into a first defect managing region of an information recording medium, said initial defective sectors being those sectors which were defective when the recording medium was last formatted;
means for registering later defective sectors into a second defect managing region of the information recording medium, said later defective sectors being those sectors which have become defective since the recording medium was last formatted;
characterised in that the apparatus further comprises
means for recording identification information (80; 81) into each of the sectors belonging to the first or second defect managing regions, wherein the identification information allows sectors belonging to the first defect managing region to be distinguished from sectors belonging to the second defect managing region;
means for reproducinq the identification information (30) ; and
means for recording and erasing information into and from sectors of said first and/or said second defect managing region in accordance with the reproduced identification information.

2. The apparatus of claim 1,
characterised in that
the identification information of a particular sector is recordable into and reproducable from an identification information region (6,7;10) which forms part of that sector, and in that preferably means are provided for recording and erasing the identification information (80; 81) so stored into and from any sector in accordance with the reproduced identification information.

3. The apparatus of one of the claims 1 to 2,
characterised in that
the information recording medium comprises an optical recording medium.

4. The apparatus of one of the claims 1 to 2,
characterised in that
the information recording medium comprises an optical disk (21).

5. An information recording medium divided up into a plurality of sectors (5) comprising
a first defect managing region into which any initial defective sectors are registered, said initial defective sectors being those regions which were defective when the recording medium was last formatted;
a second defect managing region into which later defective sectors are registered, said later defective sectors being those sectors which have become defective since the recording medium was last formatted; and
characterised in that the medium further comprises
identification information present in each sector (5) for identifying sectors belonging to the first or second defect managing region and from which sectors belonging to the first defect managing region are distinguishable from sectors belonging to the second defect managing region.

6. The information recording medium of claim 5,
characterised in that
the identification information of any particular sector is stored in an identification information region (6,7;10).

7. The information recording medium of claim 5 or 6,
characterised in that
the information recording medium is an optical recording medium.

8. The information recording medium of claim 5 or 6,
characterised in that
the medium is an optical disk (21).

## Patentansprüche

1. Vorrichtung zum Aufnehmen und Wiedergeben von Daten aus einem Informationsaufnahmemedium, das in eine Vielzahl von Sektoren (5) geteilt ist, mit
einem Mittel zum Registrieren jedweder anfänglich defekter Sektoren in einem ersten Defekthandhabungsbereich eines Informationsaufnahmemediums, wobei die anfänglich defekten Sektoren jene Sektoren sind, welche defekt waren, als das Aufnahmemedium zuletzt formatiert wurde;
einem Mittel zum Registrieren später defekter Sektoren in einem zweiten Defekthandhabungsbereich des Informationsaufnahmemediums, wobei die später defekten Sektoren jene Sektoren sind, welche defekt geworden sind, seit das Aufnahmemedium zuletzt formatiert wurde; dadurch gekennzeichnet, daß die Vorrichtung weiter umfaßt
ein Mittel zum Aufnehmen von Identifikationsinformation (80; 81) in jedem der Sektoren, die **zu dem** ersten oder zweiten Defekthandhabungsbereichen **gehören**, worin die Identifikationsinformation erlaubt, daß Sektoren, die **zu dem** ersten Defekthandhabungsbereich **gehören**, von Sektoren unterschieden werden, die **zu dem** zweiten Defekthandhabungsbereich **gehören**;
ein Mittel zum Wiedergeben der Identifikationsinformation (30); und
einem Mittel zum Aufnehmen und Löschen von Information in und aus den Sektoren des ersten und/oder des zweiten Defekthandhabungsbereiches in Übereinstimmung mit der wiedergegebenen Identifikationsinformation.

2. Die Vorrichtung nach Anspruch 1,
dadurch gekennzeichnet, daß
die Identifikationsinformation eines speziellen Sektors in einem Identifikationsinformationsbereich (6, 7; 10), welcher einen Bestandteil dieses Sektors bildet, aufnehmbar und daraus reproduzierbar ist, und dadurch, daß vorzugsweise ein Mittel zum Aufnehmen und Löschen der so abgelegten Identifikationsinformation (80; 81) in irgendeinem Sektor und daraus heraus vorgesehen ist, und zwar in Übereinstimmung mit der wiedergegebenen Identifikationsinformation.

3. Die Vorrichtung nach einem der Ansprüche 1 bis 2,
dadurch gekennzeichnet, daß
das Informationsaufnahmemedium ein optisches Aufnahmemedium umfaßt.

4. Die Vorrichtung nach einem der Ansprüche 1 bis 2,
dadurch gekennzeichnet, daß
das Informationsaufnahmemedium eine optische Platte (21) umfaßt.

5. Ein Informationsaufnahmemedium, das in eine Vielzahl von Sektoren (5) geteilt ist, mit
einem ersten Defekthandhabungsbereich, in welchem jedwede anfänglich defekten Sektoren registriert sind, wobei die anfänglich defekten Sektoren jene Bereiche sind, welche defekt waren, als das Aufnahmemedium zuletzt formatiert wurde;
einem zweiten Defekthandhabungsbereich, in welchem später defekte Sektoren registriert sind, wobei die später defekten Sektoren jene Sektoren sind, welche defekt geworden sind, seit das Aufnahmemedium zuletzt formatiert wurde; und
dadurch gekennzeichnet, daß das Medium weiter Identifikationsinformation umfaßt, die in jedem Sektor zum Identifizieren von Sektoren, die **zu dem** ersten oder zweiten Defekthandhabungsbereich **gehören**, vorliegt und aus welcher Sektoren, die **zu dem** ersten Defekthandhabungsbereich gehören, von Sektoren unterscheidbar sind, welche **zu dem** zweiten Defekthandhabungsbereich **gehören**.

6. Das Informationsaufnahmemedium von Anspruch 5,
dadurch gekennzeichnet, daß
die Identifikationsinformation eines speziellen Sektors in einem Identifikationsinformationsbereich (6, 7; 10) abgelegt ist.

7. Das Informationsaufnahmemedium von Anspruch 5 oder 6,
dadurch gekennzeichnet, daß
das Informationsaufnahmemedium ein optisch aufnehmendes Medium ist.

8. Das Informationsaufnahmemedium von Anspruch 5 oder 6,
dadurch gekennzeichnet, daß
das Medium eine optische Platte (21) ist.

## Revendications

1. Appareil pour enregistrer et reproduire des données à partir d'un support d'enregistrement d'informations divisé en plusieurs secteurs (5), qui comprend :
- des moyens pour mettre en registre tout secteur initialement défectueux dans une première région de gestion des défauts d'un support d'enregistrement d'informations, lesdits secteurs initialement défectueux étant les secteurs qui étaient défectueux la dernière fois que le support d'enregistrement a été formaté,
- des moyens pour mettre en registre tout secteur ultérieurement défectueux dans une seconde région de gestion des défauts du support d'enregistrement d'informations, lesdits secteurs ultérieurement défectueux étant les secteurs qui sont devenus défectueux depuis la dernière fois où le support d'enregistrement a été formaté, caractérisé en ce que ledit appareil comprend en outre :
- des moyens pour enregistrer une information d'identification (80, 81) dans chacun des secteurs appartenant aux première ou seconde régions de gestion des défauts, sachant que l'information d'identification permet de distinguer des secteurs appartenant à la première région de gestion des défauts des secteurs appartenant à la seconde région de gestion des défauts,
- des moyens pour reproduire l'information d'identification (30), et
- des moyens pour enregistrer et effacer une information dans des secteurs desdites première et/ou seconde régions de gestion des défauts en fonction de l'information d'identification reproduite.

2. Appareil selon la revendication 1, caractérisé en ce que l'information d'identification d'un secteur particulier peut être enregistrée et reproduite dans et à partir d'une région (6, 7; 10) d'information d'identification qui fait partie de ce secteur, et en ce que des moyens sont de préférence prévus pour enregistrer et effacer l'information d'identification (80; 81) ainsi mémorisée dans n'importe quel secteur en fonction de l'information d'identification reproduite.

3. Appareil selon l'une des revendications 1 ou 2, caractérisé en ce que le support d'enregistrement d'informations est un support d'enregistrement optique.

4. Appareil selon l'une des revendications 1 ou 2, caractérisé en ce que le support d'enregistrement d'informations est un disque optique (21).

5. Support d'enregistrement d'informations divisé en plusieurs secteurs (5), qui comprend :
- une première région de gestion des défauts dans laquelle sont mis en registre tous secteurs initialement défectueux, lesdits secteurs initialement défectueux étant les secteurs qui étaient défectueux la dernière fois que le support d'enregistrement a été formaté,
- une seconde région de gestion des défauts dans laquelle sont mis en registre tous secteurs ultérieurement défectueux, lesdits secteurs ultérieurement défectueux étant les secteurs qui sont devenus défectueux depuis la dernière fois où le support d'enregistrement a été formaté,
caractérisé en ce que le support comprend en outre une information d'identification présente dans chaque secteur (5) pour identifier des secteurs appartenant aux première ou seconde régions de gestion des défauts, information grâce à laquelle des secteurs appartenant à la première région de gestion des défauts peuvent être distingués des secteurs appartenant à la second région de gestion des défauts.

6. Support d'enregistrement d'informations selon la revendication 5, caractérisé en ce que l'information d'identification de tout secteur particulier est mémorisée dans une région (6, 7; 10) d'information d'identification.

7. Support d'enregistrement d'informations selon la revendication 5 ou 6, caractérisé en ce que le support d'enregistrement d'informations est un support d'enregistrement optique.

8. Support d'enregistrement d'informations selon la revendication 5 ou 6, caractérisé en ce que le support d'enregistrement d'informations est un disque optique (21).
